# EUROPÄISCHE PATENTANMELDUNG

(11) **EP 3 427 631 A1**
(43) Veröffentlichungstag der Anmeldung: **16.01.2019**
(21) Anmeldenummer: 18181795.8
(22) Anmeldetag: 05.07.2018
(51) Int. Cl.: A47L 15/48, D06F 58/20, D06F 58/24, D06F 58/28, A47L 15/42

(54) **GESCHIRRSPÜLMASCHINE MIT EINEM WÄRMEPUMPENKREISLAUF**

(30) Priorität: 12.07.2017 DE 102017115585; 23.01.2018 DE 102018101369
(71) Anmelder: Miele & Cie. KG, 33332 Gütersloh (DE)
(72) Erfinder: Dettmer, Martin, 33607 Bielefeld (DE); Tegeler, Daniel, 33649 Bielefeld (DE); Dahms, Tobias, 30519 Hannover (DE); Bertram, Andre, 33609 Bielefeld (DE); Kornfeld, André, 33378 Rheda-Wiedenbrück (DE); Steinmeier, Ralph, 32052 Herford (DE); Nierling, Andreas, 49326 Melle (DE); Runau, Benjamin, 33611 Bielefeld (DE); Schröder, Nils, 33611 Bielefeld (DE)

(57) **Zusammenfassung**

Die Erfindung betrifft eine Geschirrspülmaschine (1) zur Reinigung von Spülgut in einem Spülraum (2), aufweisend einen Wärmepumpenkreislauf einen Wärmepumpenkreislauf mit einem Wärmetauscher (13), der zusammen mit einer Ventilatoranordnung zur Erzeugung eines Luftstroms in einem Luftkanal (10) positioniert ist. Die Geschirrspülmaschine (1) zeichnet sich dadurch aus, dass die Ventilatoranordnung mindestens zwei Ventilatoren (14, 14', 14") umfasst.

## Beschreibung

Die Erfindung betrifft eine Geschirrspülmaschine, insbesondere eine Haushalts-Geschirrspülmaschine, zur Reinigung von Spülgut in einem Spülraum, aufweisend einen Wärmepumpenkreislauf mit einem Wärmetauscher, der zusammen mit einer Ventilatoranordnung zur Erzeugung eines Luftstroms in einem Luftkanal positioniert ist.

Zur Senkung des Energieverbrauchs von Geschirrspülmaschinen ist der Einsatz von Wärmepumpen bekannt. Beispielsweise beschreibt die Druckschrift EP 2 682 038 A2 eine Geschirrspülmaschine mit einer Luft-Wasser-Wärmepumpe, die Energie aus der Umgebungsluft entnimmt, um energieintensive Schritte des Spülprogramms, z.B. ein Aufheizen von Spülflüssigkeit, zu unterstützen. Dabei ist in einem Sockel der Geschirrspülmaschine ein Luftkanal mit einem Ventilator ausgebildet, in dem ein Wärmetauscher eines Verdampfers des Wärmepumpenkreislaufs angeordnet ist. Durch den Verdampfer wird der vorbeigeführten Luft Wärme entzogen. Es ist vorgesehen, einen Lufteinlass an der vorderen Seite des Sockels der Geschirrspülmaschine zu positionieren, wobei ein Luftauslass im hinteren Bereich des Sockels nach hinten oder zu einer Seite angeordnet ist.

Aus der Druckschrift WO 2015/185086 A1 ist eine vergleichbare Anordnung eines Wärmepumpenkreislaufs in einer Geschirrspülmaschine bekannt, wobei ein Ventilator mit regelbarer Drehzahl eingesetzt wird, um den Luftstrom durch den Wärmetauscher zu erzeugen. Eine Temperatur der Spülflüssigkeit wird durch einen entsprechend angeordneten Temperatursensor ermittelt und die Drehzahl des Ventilators in Abhängigkeit der gemessenen Temperatur gesteuert. Auf diese Weise kann der Wärmetauscher und damit der Wärmepumpenkreislauf in seiner Effizienz optimal angepasst an die Temperatur der Spülflüssigkeit betrieben werden.

Nachteilig dabei ist, dass ein Ventilator eingesetzt werden muss, dessen Motor in seiner Drehzahl regelbar ist. Dieses ist bei bestimmten gängigen Typen von Ventilatoren nicht oder nur mit aufwändiger Ansteuerelektronik des Ventilators möglich.

Es ist eine Aufgabe der vorliegenden Erfindung, eine Geschirrspülmaschine der eingangs genannten Art zu schaffen, bei der eine Variation, insbesondere eine Erhöhung des Luftvolumenstroms durch den Luftkanal und den Wärmetauscher des Wärmepumpenkreislaufs auch ohne einen in seiner Drehzahl variablen Ventilator erfolgen kann.

Diese Aufgabe wird gelöst durch eine Geschirrspülmaschine mit den Merkmalen des unabhängigen Anspruchs. Vorteilhafte Ausgestaltungen und Weiterbildungen sind Gegenstand der abhängigen Ansprüche.

Eine erfindungsgemäße Geschirrspülmaschine zeichnet sich dadurch aus, dass die Ventilatoranordnung mindestens zwei Ventilatoren umfasst. Diese Anordnung erlaubt es, einen höheren Luftvolumenstrom zu erzielen als mit einem (baugleichen) einzelnen Ventilator. Zudem kann der Luftvolumenstrom variiert werden, indem entweder nur einer oder zum Erzielen eines höheren Luftvolumenstroms mehrere Ventilatoren betrieben werden. Vorteilhaft kann auf diese Weise ein variabler und hoher Luftvolumenstrom mit handelsüblichen und damit kostengünstigen Ventilatoren erzielt werden. Die Ventilatoren können dabei in der Luftströmungsrichtung vor, hinter, oder teilweise vor bzw. hinter dem Wärmetauscher angeordnet sein.

Die Luft-Wasserwärmepumpe der Geschirrspülmaschine entnimmt Energie aus der Umgebungsluft, d.h. aus der Raumluft, um energieintensive Schritte des Spülprogramms, z.B. ein Aufheizen von Spülflüssigkeit, zu unterstützen. Dabei ist der Luftkanal mit der Ventilatoranordnung vorzugsweise in einem Sockel der Geschirrspülmaschine ausgebildet. In dem Luftkanal ist ein Wärmetauscher eines Verdampfers des Wärmepumpenkreislaufs angeordnet. Durch den Verdampfer wird der vorbeigeführten Luft Wärme entzogen. Es ist vorgesehen, einen Lufteinlass an der vorderen Seite des Sockels der Geschirrspülmaschine zu positionieren, wobei ein Luftauslass im hinteren Bereich des Sockels nach hinten oder zu einer Seite angeordnet ist.

Weiter können die zwei oder mehr Ventilatoren im Luftstrom hintereinander, d.h.seriell, angeordnet sein. Dadurch steigt der maximal erzielbare Druckunterschied der Ventilatoranordnung, was zu einem höheren Luftvolumenstrom führt.

In einer alternativen Ausführungsform können die mindestens zwei Ventilatoren im Luftstrom nebeneinander, d.h. parallel, angeordnet sein. Dabei kann ein gemeinsamer Luftauslass des Luftkanals vorgesehen sein, oder es können mindestens zwei Luftauslässe vorgesehen sein, die unterschiedlichen Ventilatoren zugeordnet sind. Diese Anordnung kann vorteilhaft sein, da die dann kleineren Luftauslässe unter Umständen besser an einer oder zwei Seiten einer Geschirrspülmaschine angeordnet werden können.

Auch ist es möglich, einen der separaten Luftauslässe für einen besonderen Zweck zu verwenden, beispielsweise für eine Unterstützung der Trocknung. Die aus dem einen der separaten Luftauslässe Luftauslass ausströmende Luft wird dabei zu geeigneten Zeiten in der Prozessführung des Spülprozesses zu einer Außenseite des Spülraums geleitet, insbesondere an der Außenseite des Spülraums, also außenseitig entlanggeführt, um diesen zu kühlen. An den gekühlten Wänden des Spülraumes kondensiert Flüssigkeit im Inneren des Spülraums, wodurch ein Trocknungsprozess des Spülguts unterstützt wird.

Insbesondere bei parallel angeordneten Ventilatoren ist vorteilhaft mindestens ein Absperrorgan im Luftkanal angeordnet, um einen Luftstrom durch zumindest einen der Ventilatoren zu unterbinden. Auf diese Weise kann ein Luftstrom oder Luftrückstrom durch den betreffenden Ventilator verhindert werden, wenn dieser nicht in Betrieb ist. Das Absperrorgan kann beispielsweise eine Klappe oder ein Schieber sein oder einen oder mehrere Klappen oder Schieber umfassen. Es kann insbesondere auch als Lamellensysstem ausgebildet sein. Es kann aktiv angesteuert verstellt werden, oder auch - insbesondere beim Einsatz einer oder mehrerer Klappen - passiv durch Luftdruckunterschiede bewegt werden.

Bei einem Einsatz von nebeneinander angeordneten Ventilatoren kann vorteilhaft ein Luftkanal realisiert werden, dessen Querschnittsfläche zumindest abschnittsweise rechteckig oder L-förmig ist. Mit einem derart geformten Luftkanal kann der im Sockelbereich einer Geschirrspülmaschine zur Verfügung stehende Platz besonders effizient genutzt werden.

In einer weiteren vorteilhaften Ausgestaltung der Geschirrspülmaschine sind im Luftkanal mindestens ein Temperatursensor und/oder mindestens ein Drucksensor angeordnet. Bevorzugt weist die Geschirrspülmaschine eine Steuereinrichtung zum Ein- bzw. Ausschalten von zumindest einem der Ventilatoren und/oder zum Variieren der Drehzahl von zumindest einem der Ventilatoren abhängig von mindestens einem Messwert des Temperatursensors und/oder des Drucksensors auf. Die Temperatur- bzw. Druckmessung und insbesondere die Bestimmung einer durch den Wärmetauscher hervorgerufenen Temperaturdifferenz bzw. eines Differenzdrucks ermöglicht es, den Betrieb des Wärmepumpenkreislaufs in der Geschirrspülmaschine effizienter durchzuführen. Zudem können die genannten Messwerte Aufschluss über einen Verschmutzungsgrad des Wärmetauschers oder eines diesem vorgeordneten Luftfilters geben.

In einer weiteren vorteilhaften Ausgestaltung der Geschirrspülmaschine ist ein dem Luftkanal nebengeordneter, nämlich nicht durch den Wärmetauscher geführter Bypasskanal vorhanden. Luftkanal und Bypasskanal können dabei jeweils von einem separaten Lufteinlass mit zuströmender Luft versorgt werden. Stattdessen können sie aber auch von einem gemeinsamen Lufteinlass versorgt werden so dass die in den Lufteinlass einströmende Luft sich nachfolgend auf den Luftkanal und den Bypasskanal aufteilt. Luftkanal und Bypasskanal weisen vorzugsweise einen gemeinsamen Luftauslass auf, die Luftströme werden also in Strömungsrichtung hinter dem Wärmetauscher wieder zusammengeführt. Hierdurch ist gewährleistet, dass die aus dem Luftauslass ausströmende Luft nicht zu stark abfällt und so von einem Benutzer in dem Raum, in dem die Geschirrspülmaschine aufgestellt ist, nicht als störender kalter Luftstrom empfunden wird. Zur Erzeugung der Luftströme weist die Ventilanordnung im Luftkanal und im Bypass jeweils ein oder mehrere Ventilatoren auf.

Die Erfindung wird nachfolgend anhand eines Ausführungsbeispiels mit Hilfe von Figuren näher erläutert. Die Figuren zeigen:
- Fig. 1: eine schematische Schnittdarstellung einer Geschirrspülmaschine mit einem Wärmepumpenkreislauf;
- Fig. 2-7: jeweils eine schematische Darstellung eines Luftkanals mit Wärmetauscher und Ventilatoranordnung in verschiedenen Ausführungsbeispielen;
- Fig. 8, 9: jeweils eine Draufsicht auf eine Ventilatoranordnung zur Nutzung in einem Luftkanal; und
- Fig. 10-16: jeweils eine schematische Darstellung eines Luftkanals mit Wärmetauscher und Ventilatoranordnung in verschiedenen Ausführungsbeispielen.

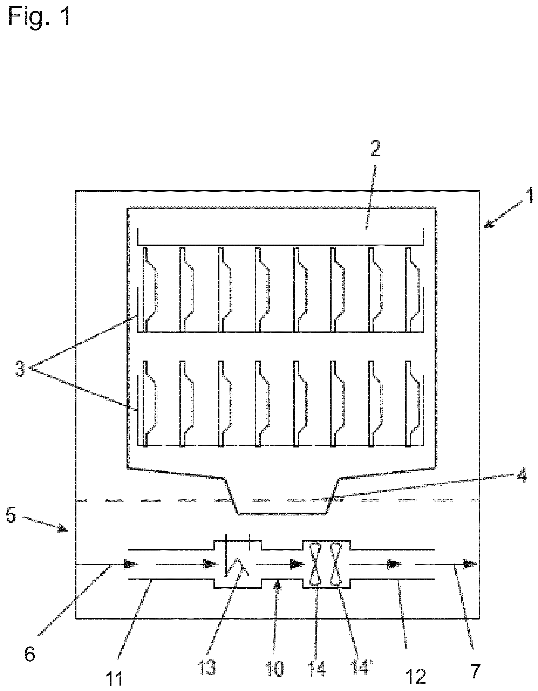

In Fig. 1 ist eine Geschirrspülmaschine 1 in einem schematischen Schnittbild dargestellt. Der Schnitt ist einer vertikalen Ebene ausführt, die senkrecht zu einer in den Figuren auf der rechten Seite liegenden Front der Geschirrspülmaschine 1 verläuft.

Die Geschirrspülmaschine 1 weist einen Spülraum 2 auf, in den Spülgut eingeräumt werden kann und in dem Spülflüssigkeit zur Reinigung des Spülguts versprüht wird. Beispielhaft sind zwei Spülgutträger 3 mit Spülgut dargestellt. Zum Versprühen der Spülflüssigkeit sind beispielsweise rotierende Sprüharme vorhanden, die aus Gründen der Übersichtlichkeit hier nicht gezeigt sind. Vom Spülgut oder Wänden des Spülraums 2 abtropfende Spülflüssigkeit sammelt sich in einem Sammeltopf 4 in einem unteren Bereich des Spülraums 2. Von dort wird die Spülflüssigkeit über eine Umwälzpumpe mit Druck beaufschlagt wieder im Spülraum 2 zur Reinigung eingesetzt, wodurch ein Spülkreislauf gebildet ist. Der Sammeltopf 4 ist ebenso wie die Umwälzpumpe in einem Sockel 5 der Geschirrspülmaschine 1 unterhalb des Spülraums 2 angeordnet.

Der Spülraum 2 der Geschirrspülmaschine 1 ist von vorne über eine schwenkbare Tür zugänglich, auf die eine (Möbel-) Front aufgesetzt ist, um einer Küchenzeile, in die die Geschirrspülmaschine 1 eingebaut ist, ein einheitliches Erscheinungsbild zu geben. Aus Gründen der Übersichtlichkeit ist die schwenkbare Tür mitsamt der (Möbel-) Front in der Figur nicht näher dargestellt.

Im Sockel 5 verläuft von vorne nach hinten ein Luftkanal 10, in dem sich ein Wärmetauscher 13 eines Verdampfers und eine Anordnung von mindestens zwei Ventilatoren 14, 14' befindet. Der Verdampfer ist Teil eines weiter nicht dargestellten Wärmepumpenkreislaufs, durch den Wärme aus der Umgebung aufgenommen wird und zum Aufheizen der Spülflüssigkeit eingesetzt wird.

Im Bereich der Front der Geschirrspülmaschine 1 ist ein Lufteinlass 11 angeordnet, über den Luft in den Luftkanal 10 eingesaugt werden kann. Im vorderen Bereich des Luftkanals 10 kann ein Luftfilter positioniert sein, durch den im Betrieb der Geschirrspülmaschine 1 beim Benutzen der Wärmepumpe über die Ventilatoren 14, 14' Luft in den Luftkanal 5 eingesaugt wird. Dadurch entsteht im Betrieb der Wärmepumpe ein Luftstrom, der in Fig. 1 durch entsprechende Strömungspfeile schematisch skizziert ist.

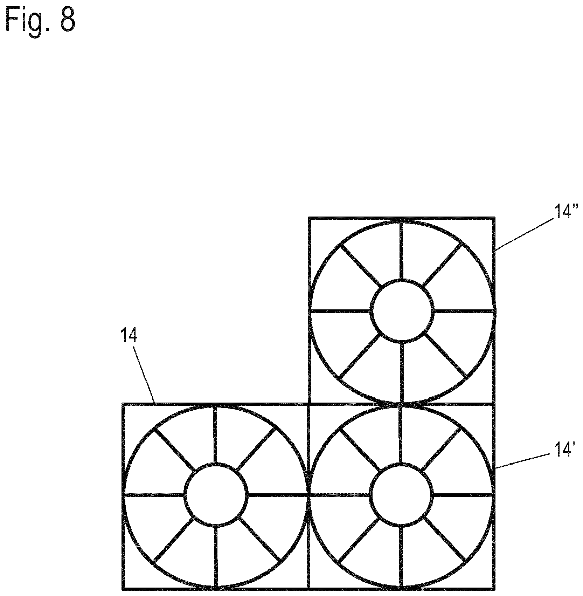

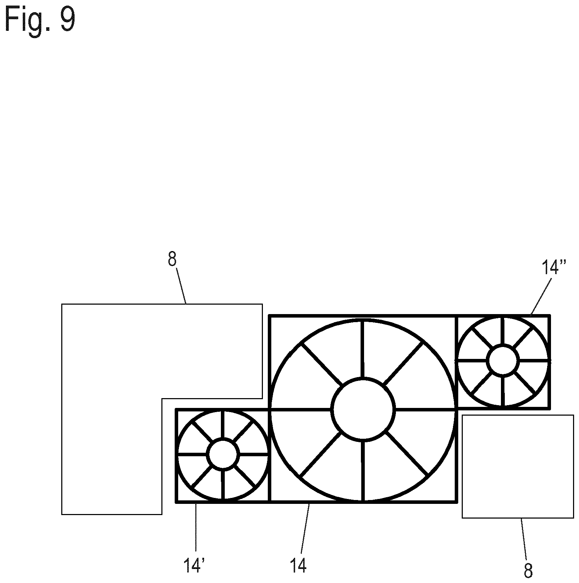

In den nachfolgend beschriebenen Figuren sind verschiedenen Ausgestaltungen von Luftkanälen 10 mit einer anmeldungsgemäßen Ventilatoranordnung bzw. in den Fig. 8 und 9 Darstellungen von geeigneten Ventilatoranordnungen wiedergegeben, die in einem Wärmenpumpenkreislauf beispielsweise der in Fig. 1 gezeigten Geschirrspülmaschine 1 eingesetzt werden können. In allen Figuren kennzeichnen gleiche Bezugszeichen gleiche oder gleichwirkende Elemente.

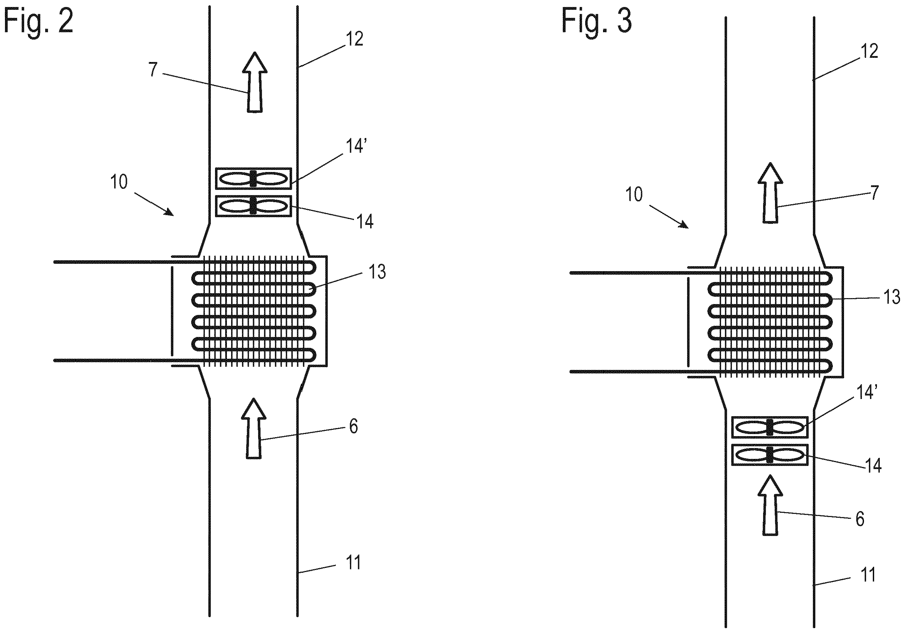

Fig. 2 zeigt in einer schematischen Schnittdarstellung einen Luftkanal 10, der im Wesentlichen dem Luftkanal 10 der Geschirrspülmaschine 1 der Fig. 1 entspricht. Der Luftkanal 10 weist einen Lufteinlass 11, in den einströmende Luft 6 eintritt, und einen Luftauslass 12, aus dem ausströmende Luft 7 austritt, auf. Im Luftkanal 10 ist - hier schematisch und beispielhaft mittig angeordnet - ein Wärmetauscher 13 positioniert, der von der einströmenden Luft 6 durchströmt wird. In Strömungsrichtung der einströmenden bzw. ausströmenden Luft 6, 7 ist in diesem Beispiel hinter dem Wärmetauscher 13 eine Ventilatoranordnung im Luftkanal 10 positioniert, bei der zwei (Axial-) Ventilatoren 14, 14' hintereinander angeordnet sind.

Die Anordnung von zwei (oder in alternativen Ausgestaltungen auch ggf. mehr als zwei) Ventilatoren 14, 14' erlaubt es, einen höheren Luftvolumenstrom zu erzielen als mit einem einzelnen (baugleichen) Ventilator möglich ist. Der Luftvolumenstrom kann variiert werden, indem nur einer oder für einen höheren Luftvolumenstrom beide Ventilatoren 14, 14' betrieben werden. Vorteilhaft kann auf diese Weise ein variierbarer und hoher Luftvolumenstrom mit handelsüblichen und damit kostengünstigen Ventilatoren 14, 14' erzielt werden. Bei der gezeigten seriellen Anordnung der Ventilatoren 14, 14' steigt der maximal erzielbare Druckunterschied der Ventilatoranordnung, was zu einem höheren Luftvolumenstrom führt.

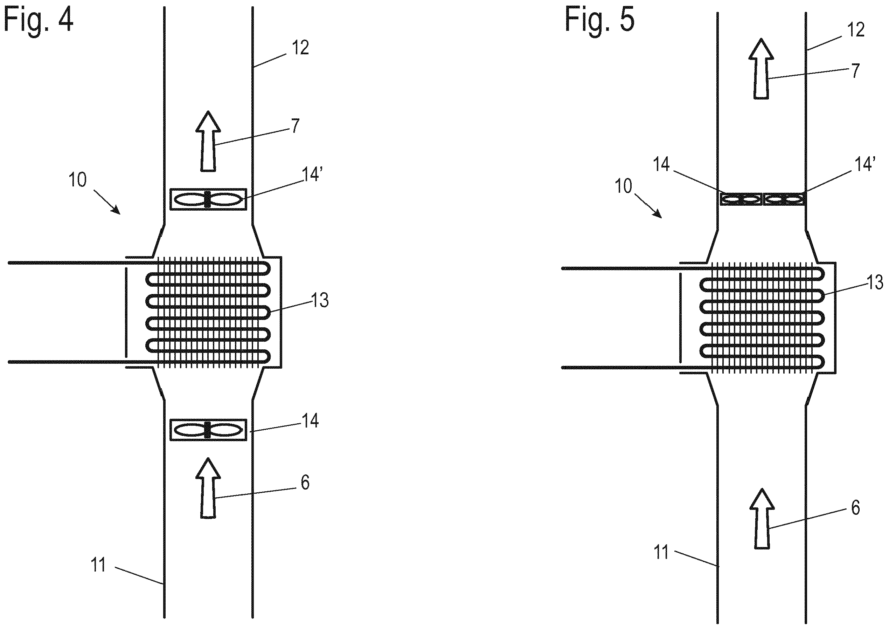

Fig. 3 zeigt in gleicher Darstellungsweise wie Fig. 2 eine alternative Ausgestaltung des Luftkanals 10, bei dem die beiden Ventilatoren 14, 14' vor dem Wärmetauscher 13 angeordnet sind. Bei der Ausgestaltung gemäß Fig. 4 sind wiederum 2 Ventilatoren 14, 14' im Luftstrom hintereinander angeordnet, wobei der Ventilator 14 vor dem Wärmetauscher 13 und der Ventilator 14' hinter dem Wärmetauscher 13 positioniert ist.

Strömungstechnisch ist die in Fig. 2 gezeigte Anordnung besonders vorteilhaft, da Luft hinter einem Ventilator häufig drallbehaftet ist und bei Anordnung der Ventilatoren 14, 14' in Strömungsrichtung hinter dem Wärmetauscher 13 eine bestmöglich axial ausgerichte Strömung der Luft erzielt wird. Die Anordnung der Fig. 3 ist dagegen energetisch vorteilhaft, da Abwärme der Ventilatoren 14, 14' vom Wärmetauscher 13 aufgenommen und dem Spülprozess zugeführt werden kann. Um den ggf. nachteiligen Einfluss eines Luftdralls möglichst klein zu halten, ist dabei allerdings ein gewisser Mindestabstand zwischen den Ventilatoren 14, 14' und dem Wärmetauscher 13 sinnvoll. Die Anordnung gemäß Fig. 4 stellt einen Kompromiss zwischen den beiden Ausgestaltungen gemäß den Fig. 2 und 3 dar.

Fig. 5 zeigt in gleicher Art wie die vorangehenden Figuren ein weiteres Ausführungsbeispiel eines Luftkanals 10 mit einer anmeldungsgemäßen Ventilatoranordnung. Wiederum sind zwei Ventilatoren 14, 14' vorgesehen, beides ebenfalls Axialventilatoren. Die Ventilatoren 14, 14' sind in diesem Ausführungsbeispiel nicht hintereinander, sondern parallel nebeneinander angeordnet. Auf diese Weise wird der geförderte Luftvolumenstrom gegenüber einem einzelnen baugleichen Ventilator erhöht. Bei Verwendung von zwei Ventilatoren 14, 14' gegenüber einem baugleichen Ventilator kann so der Volumenstrom idealerweise verdoppelt werden.

Es ist jedoch auch denkbar, die in der Fig. 5 gezeigte Anordnung nicht zu einer Erhöhung des absoluten Volumenstroms einzusetzen, sondern zu verwenden, um eine vorteilhaftere Querschnittsform des Luftkanals 10 im Bereich der Ventilatoren 14, 14' realisieren zu können.

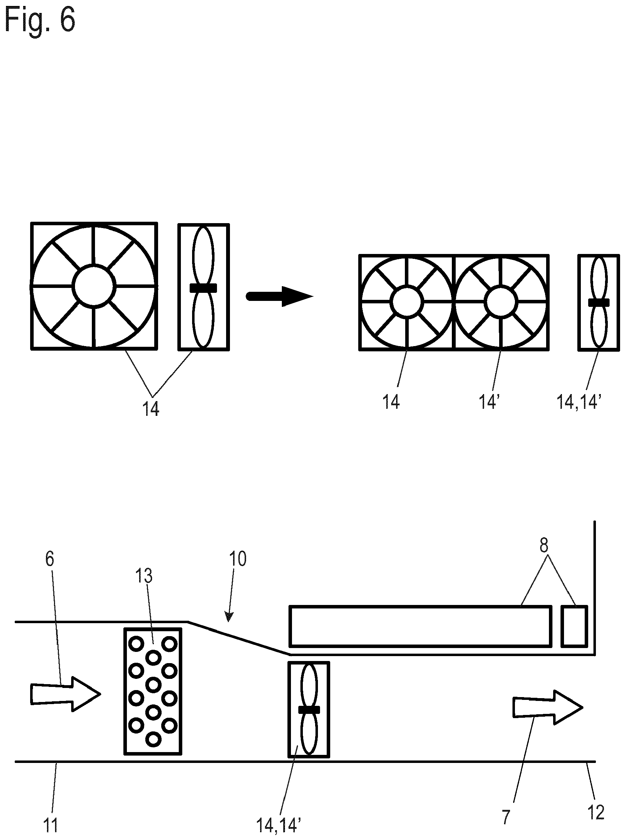

Im oberen Teil der Fig. 6 ist zur Verdeutlichung dieser Vorgehensweise links eine Aufsicht bzw. Seitenansicht eines Ventilators 14 dargestellt, der - auf der rechten Seite zu sehen - durch die anmeldungsgemäße parallele Anordnung zweier Ventilatoren 14', 14" ersetzt wird. Der Durchmesser der Ventilatoren 14', 14" ist so gewählt, dass beide Ventilatoren zusammen die gleiche Fläche im Luftkanal belegen wie der links dargestellte Ventilator 14. Bei gleichem Querschnitt kann somit der Luftkanal 10 im Bereich der Ventilatoren 14', 14" flacher und breiter ausgeführt werden, was im unteren Teil der Fig. 6 in einer Seitenansicht des Luftkanals 10 dargestellt ist. Durch die geänderte Querschnittsform (hier rechteckig statt quadratisch) kann der Luftkanal vorteilhaft an die Platzsituation im Sockel einer Geschirrspülmaschine angepasst werden. Beispielhaft sind Komponenten 8 der Geschirrspülmaschine, zum Beispiel Teile des Spültopfs, ein Salzbehälter oder Anschlusselemente z.B. für einen Netzanschluss der Geschirrspülmaschine gezeigt, um die Einbausituation zu verdeutlichen.

Beim Beispiel der Fig. 6 ist die Querschnittsform des Luftkanals 10 im Bereich des Wärmetauschers 13 unverändert und verändert sich zwischen dem Wärmetauscher 13 und der Ventilatoranordnung. Bis zum Luftauslass 12 wird der geänderte rechteckige Querschnitt beibehalten.

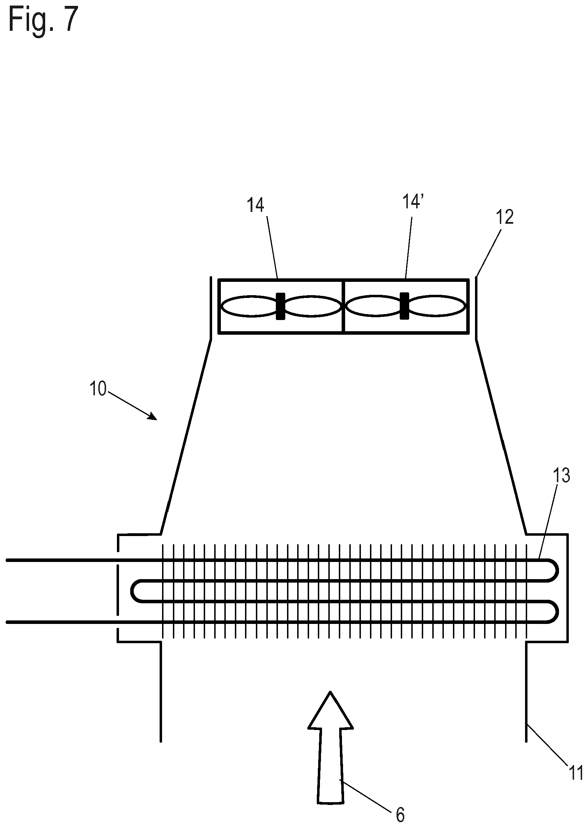

Fig. 7 zeigt eine alternative Ausgestaltung, bei der eine flache, rechteckige Bauweise, die durch die Anordnung der beiden Lüfter 14, 14' nebeneinander begünstigt wird, auch im Bereich des Wärmetauschers 13 beibehalten wird. Es wird also ein nicht quadratischer, sondern in seinem Querschnitt rechteckiger Wärmetauscher 13 eingesetzt. Der so entstandene Luftkanal 10 ist über seine gesamte Länge besser an die Platzverhältnisse in einem Sockel einer Geschirrspülmaschine angepasst.

Es versteht sich, dass auch bei den Beispielen, bei denen Ventilatoren 14, 14', 14" nebeneinander angeordnet sind und bezüglich ihres Luftstroms somit parallel geschaltet sind, die Ventilatoranordnung ganz oder teilweise in Luftströmungsrichtung auch vor dem Wärmetauscher 13 positioniert sein kann.

In den Fig. 8 und 9 sind Draufsichten auf Ventilatoranordnungen und sich damit ergebene Querschnittsformen des dazugehörigen Luftkanals in zwei weiteren Ausführungsbeispielen dargestellt. Bei diesen beiden Beispielen werden drei Ventilatoren 14, 14', 14" eingesetzt, wobei im Beispiel der Fig. 3 jeweils Ventilatoren mit gleichem Durchmesser und gleicher Fläche eingesetzt werden, wohingegen beim Beispiel der Fig. 9 ein Ventilator 14 mit größerem Durchmesser und zwei Ventilatoren 14'. 14" mit kleinerem Durchmesser eingesetzt werden.

Die beiden Anordnungen zeigen beispielhaft, dass sich durch eine parallele Anordnung mehrerer Ventilatoren 14-14" Luftkanäle 10 mit nahezu beliebiger Querschnittsform realisieren lassen, die sich optimal an den zur Verfügung stehenden Bauraum im Sockel einer Geschirrspülmaschine angepassen lassen. Beim Beispiel der Fig. 9 sind wiederum weitere Komponenten 8 der Geschirspülmaschine eingezeichnet. Es ist ersichtlich, dass der zwischen diesen Komponenten 8 verfügbare Platz bestmöglich durch den Luftkanal 10 genutzt werden kann.

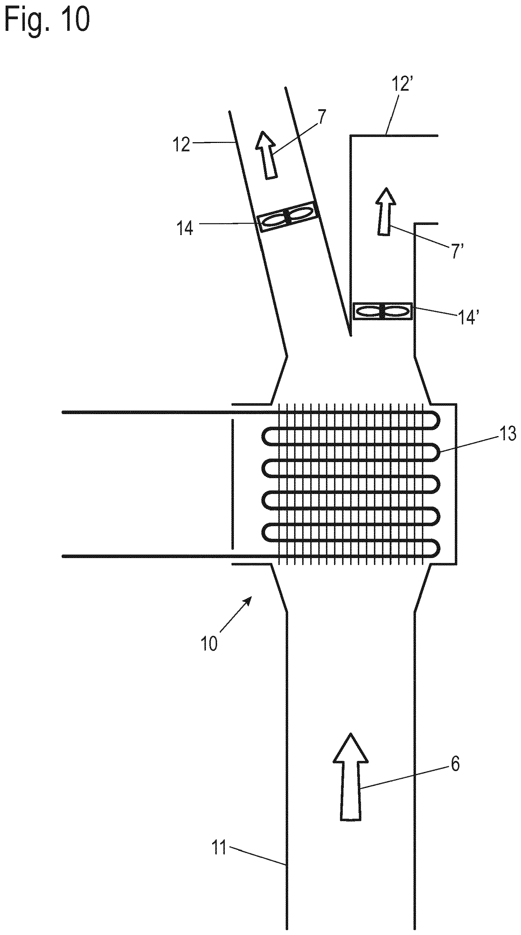

In Fig. 10 ist ein weiteres Ausführungsbeispiel eines Luftkanals 10 mit einer Ventilatoranordnung mit zwei parallel arbeitenden Ventilatoren 14, 14' dargestellt. Im Unterschied zu den bisherigen Ausführungsbeispielen ist dem Ventilator 14' hierbei ein eigener Luftauslass 12' zugeordnet mit entsprechend separater ausströmender Luft 7'. Diese Anordnung kann vorteilhaft sein, da die beiden kleineren Luftauslässe 12, 12' unter Umständen besser an einer oder zwei Seiten einer Geschirrspülmaschine angeordnet werden können.

Auch ist es möglich, den Luftauslass 12' für einen besonderen Zweck zu verwenden, beispielsweise für eine, beispielsweise für eine Unterstützung der Trocknung. Die aus dem Luftauslass 12' ausströmende Luft 7' wird dabei zu geeigneten Zeiten in der Prozessführung des Spülprozesses seitlich an dem Spülraum (vgl. Spülraum 2 der Fig. 1) vorbei geleitet, um diesen zu kühlen. An den gekühlten Wänden des Spülraumes kondensiert Flüssigkeit im Inneren des Spülraums, wodurch ein Trocknungsprozess des Geschirrs unterstützt wird.

Während eines Spülprozesses ist eine Kühlung der Wände des Spülraums jedoch aus Gründen einer schlechten Energieeffizienz unerwünscht. Die Aufteilung durch die beiden separaten Luftauslässe 12, 12' kann verwendet werden, um ausströmende Luft 7, 7'je nach Bedarf in den freien Raum oder zur Unterstützung der Trocknung einzusetzen; dabei kann ein Absperrorgan vorhanden sein, mit dem der nicht genutzte Luftauslass geschlossen werden kann. Luft, die seitlich am Spülraum vorbeiströmt, kann zusätzlich noch verwendet werden, um die Arbeitsplatte vorzuwärmen, so dass sich dort nach einer Türöffnung, etwa einer automatischen Türöffnung, keine Feuchtigkeit niederschlägt. Ebenso kann die Luft genutzt werden, um die aus dem Spülraum austretenden Wrasen nach der Türöffnung, etwa einer automatischen Türöffnung, zu verdünnen.

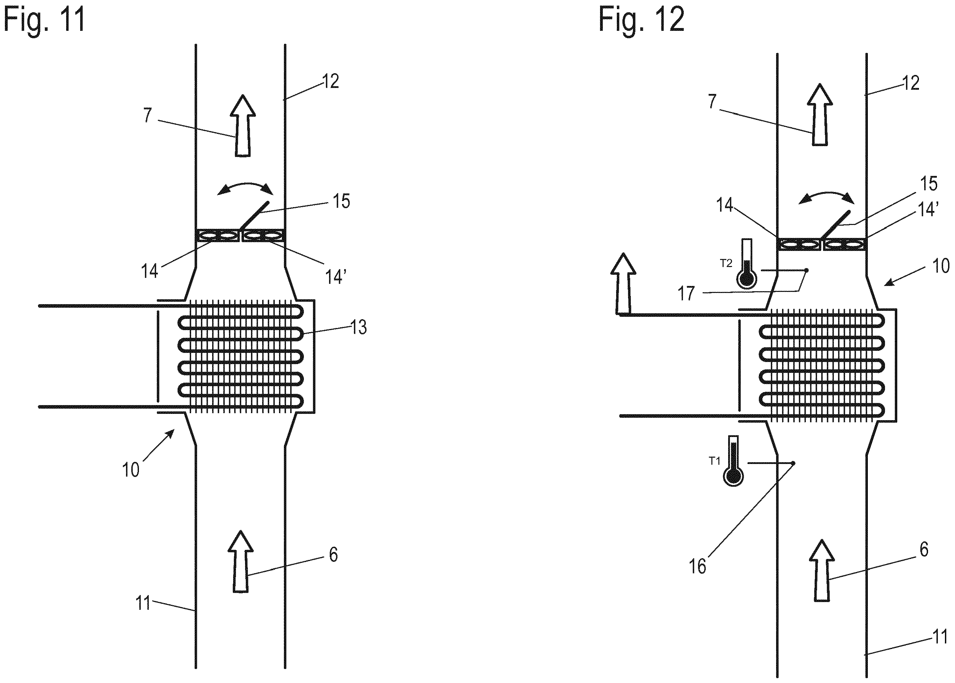

Bei parallel geschalteten Ventilatoren 14, 14' kann durch hinzu- oder wegschalten einer der Ventilatoren 14, 14' ebenfalls der Luftvolumenstrom variiert werden. Anders als bei einer axialen Anordnung der Ventilatoren 14, 14' (vgl. Fig. 2-4) besteht jedoch die Gefahr einer Luftrückströmung durch einen nicht aktiv angetriebenen Ventilator 14, 14'. Um diesen Luftrückstrom zu verhindern, ist im Ausführungsbeispiel der Fig. 11 eine Klappe 15 vorgesehen, die einen nicht-aktiv angetriebenen Ventilator 14, 14' abdeckt und somit einen Luftrückstrom verhindert. Eine derartige Klappe 15 kann aktiv durch einen Aktor bewegt werden. Es ist jedoch auch ein passiver Betrieb einer derartigen Klappe 15 möglich, bei dem sich die Klappe 15 durch die sich einstellenden Druckverhältnissen an den Ventilatoren 14, 14' öffnet bzw. schließt.

Fig. 12 zeigt eine Weiterbildung der Anordnung der Fig. 11, wobei in einem Bereich vor und in einem Bereich hinter dem Wärmetauscher 13 jeweils ein Temperatursensor 16, 17 angeordnet ist. Mit den beiden Temperatursensoren 16, 17 kann entsprechend eine Temperatur T1, T2 der einströmenden Luft 6 bzw. der ausströmenden Luft 7 gemessen werden. Eine aus den gemessenen Temperaturen T1, T2 bestimmte Temperaturdifferenz, die durch den Wärmetauscher 13 erzielt wird und/oder die gemessene Temperatur der ausströmenden Luft 7 kann zur Steuerung der Ventilatoren 14, 14' eingesetzt werden. Beispielsweise kann bei einer zu geringen Temperatur der ausströmenden Luft 7, die von Benutzern einer Küche, in der die Geschirrspülmaschine aufgestellt ist, als unangenehm empfunden werden kann, da sie z. B. zu kalten Füßen führen kann, der Luftvolumenstrom erhöht werden, indem ein zweiter Ventilator 14, 14' zugeschaltet wird.

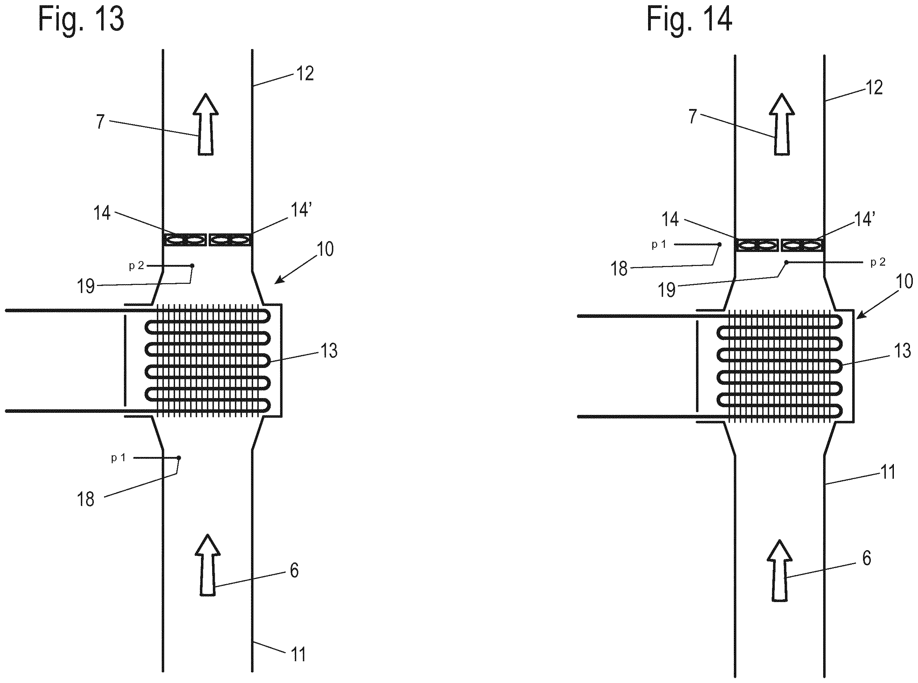

Anstelle oder zusätzlich zu einer Temperaturmessung kann, wie in Fig. 13 gezeigt, vor bzw. hinter dem Wärmetauscher 13 auch eine Druckmessung mit Hilfe von Drucksensoren 18, 19 erfolgen. Beim dargestellten Beispiel wird ein erster Druck p1 vor dem Wärmetauscher 13 und ein zweiter Druck p2 hinter dem Wärmetauscher 13 ermittelt. Aus einer Druckdifferenz (p1-p2) lässt sich der geförderte Luftvolumenstrom bestimmen. Es kann dann beispielsweise vorgesehen sein, einen der Ventilatoren 14, 14' abhängig von der gemessenen Druckdifferenz ein- bzw. auszuschalten, um den Wärmetauscher 13 und damit den Wärmepumpenkreislauf in einem vorteilhaften Betriebsparameterbereich zu betreiben.

Weiterhin lässt die Druckmessung und insbesondere die ermittelte Druckdifferenz einen Rückschluss auf einen Verschmutzungsgrad des Wärmetauschers 13 zu. Abhängig von einem abgeleiteten Verschmutzungsgrad kann beispielsweise ein Signal erzeugt werden, das den Benutzer auf eine notwendige oder sinnvollerweise durchzuführende Wartung hinweist.

Eine alternative Anordnung der Drucksensoren 18, 19 ist in Fig. 14 dargestellt. Der Drucksensor 18 misst hierbei nicht den Druck im Luftkanal 10 vor dem Wärmetauscher 13, sondern einen Umgebungsdruck. Eine auf diese Weise gemessene Druckdifferenz p1-p2 erlaubt es, nicht nur einen Verschmutzungsgrad des Wärmetauschers 13, sondern auch eines ggf. den Wärmetauscher 13 vorgeordneten Luftfilters zu messen.

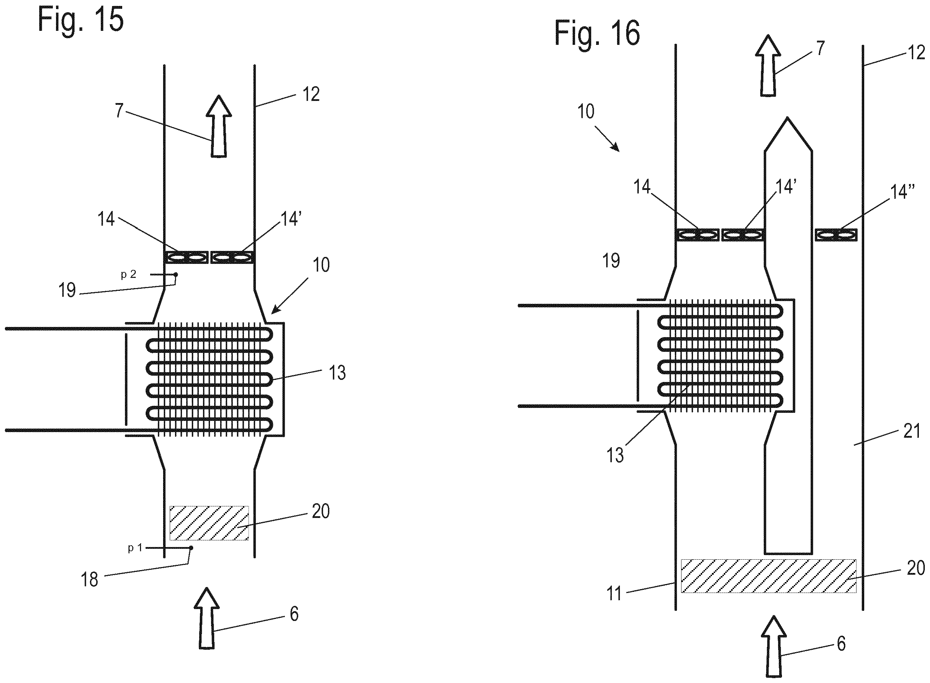

Ein Luftkanal 10 mit einem Luftfilter 20 ist beispielhaft in der Fig. 15 dargestellt. Hier ist der Luftfilter 20 dem Wärmetauscher 13 vorgeordnet, um eine Verschmutzung des schwierig zu reinigenden Wärmetauschers 13 durch eingesaugte Schmutzpartikel zu verhindern. Eine Druckdifferenz p1-p2 lässt Rückschlüsse auf den Verschmutzungsgrad des Luftfilters 20 zu. Übersteigt der ermittelte Verschmutzungsgrad einen vorgegebenen Wert, kann ein Signal an den Benutzer ausgegeben werden, das zum Wechsel des Luftfilters 20 auffordert.

Die in den Fig. 13-15 dargestellte Druckmessung und insbesondere die Bestimmung eines Differenzdrucks ermöglicht es zudem, den Betrieb des Wärmepumpenkreislaufs in der Geschirrspülmaschine effizienter durchzuführen. Mit Hilfe von bekannten Anlagenkennlinien des Luftkanals 10, die beispielsweise den Luftvolumenstrom in Abhängigkeit des gemessenen Differenzdrucks wiedergeben, kann aus einer Messung des Differenzdrucks der Luftvolumenstrom bestimmt werden. Die Anlagenkennlinie kann dabei in einer Steuereinheit der Geschirrspülmaschine hinterlegt sein. Es kann dann durch hinzu- oder wegschalten einer der Ventilatoren 14, 14' der Luftvolumenstrom in Richtung eines für den Prozess optimalen Luftvolumenstroms eingestellt werden. Zur Festlegung des optimalen Luftvolumenstroms kann optional die Raum- und/oder Umgebungstemperatur herangezogen werden. Diese kann durch einen eigenständigen Temperatursensor bestimmt werden oder auch durch einen Temperatursensor, der bereits in der Geschirrspülmaschine vorhanden ist und beispielsweise die Temperatur der Spülflotte ermittelt. Ein Wert eines solchen Temperatursensors, gemessen zu Beginn des Spülprozesses, gibt die Raum- / Umgebungstemperatur wieder. Ggf. kann ein Temperaturwert auch über ein Gebäudesteuerungssystem von der Steuereinrichtung der Geschirrspülmaschine abgefragt werden.

Weiter kann abhängig von den Ergebnissen der Druckmessung im Luftkanal 10 auch eine Leistung eines Verdichters im Wärmepumpenkreislauf angesteuert werden, wenn ein drehzahlsteuerbarer Verdichter eingesetzt wird. Die genannten Steuermöglichkeiten des Prozesses können kombiniert werden, und auch abhängig von einem von der Geschirrspülmaschine ausgeführten Spülprogramm gewählt werden. Die Prozesssteuerung kann beispielsweise unterschiedlich ausgebildet sein, abhängig davon, ob ein besonders energieeffizientes Spülprogramm oder ein besonders schnelles oder besonders leises Spülprogramm ausgeführt werden soll.

In der Fig. 16 ist ein weiteres Ausführungsbeispiel eines Luftkanals 10 mit einer anmeldungsgemäßen Ventilatoranordnung dargestellt. In diesem Beispiel sind drei Ventilatoren 14, 14', 14" vorgesehen, wobei zwei der Ventilatoren 14, 14' dem Wärmetauscher 13 zugeordnet sind und der dritte Ventilator 14" in einem Bypass-Kanal 21 angeordnet ist, der ebenfalls von einem (gemeinsamen) Lufteinlass 11 zu einem (gemeinsamen) Luftauslass 12 führt, jedoch nicht durch den Wärmetauscher 13 führt. Bei dieser Anordnung kann durch Ansteuerung des Ventilators 14" ein zusätzlicher Luftstrom generiert werden, der die wärmere einströmende Luft 6 zu der durch den Wärmetauscher 13 abgekühlten Luft mischt, so dass die ausströmende Luft 7 in ihrer Temperatur leicht erhöht wird. Die ausströmende Luft 7 wird so von einem Benutzer in dem Raum, in dem die Geschirrspülmaschine aufgestellt ist, als weniger störender kalter Luftstrom empfunden.

Zudem kann es, je nach Aufstellungs- oder Einbausituation der Geschirrspülmaschine vorkommen, dass ein Teil der ausströmenden Luft 7 wieder unmittelbar in den Lufteinlass 11 des Luftkanals 10 eintritt. Dieses wirkt sich nachteilig auf die Energieeffizienz des Wärmepumpenkreislaufs aus, da die einströmende Luft 6 bei einem Mitführen der abgekühlten ausströmenden Luft 7 mit geringerer Temperatur in den Wärmetauscher 13 eintritt. Durch das Hinzumischen wärmerer Raumluft durch den Bypass-Kanal 21 hat die ausströmende Luft 7 eine höhere Temperatur, was die nachteiligen Auswirkungen des Luft-Kurzschlusses verringert.

### Bezugszeichen

- 1: Geschirrspülmaschine
- 2: Spülraum
- 3: Spülgutträger
- 4: Spültopf
- 5: Sockel
- 6: einströmende Luft
- 7: ausströmende Luft
- 10: Luftkanal
- 11: Lufteinlass
- 12: Luftauslass
- 13: Wärmetauscher
- 14, 14', 14": Ventilator
- 15: Klappe
- 16, 17: Temperatursensor
- 18, 19: Drucksensor
- 20: Luftfilter
- 21: Bypass-Kanal

## Patentansprüche

1. Geschirrspülmaschine (1) zur Reinigung von Spülgut in einem Spülraum (2), aufweisend einen Wärmepumpenkreislauf mit einem Wärmetauscher (13), der zusammen mit einer Ventilatoranordnung zur Erzeugung eines Luftstroms in einem Luftkanal (10) positioniert ist, **dadurch gekennzeichnet, dass** die Ventilatoranordnung mindestens zwei Ventilatoren (14, 14', 14") umfasst.

2. Geschirrspülmaschine (1) nach Anspruch 1, bei der die mindestens zwei Ventilatoren (14, 14', 14") im Luftstrom hintereinander angeordnet sind.

3. Geschirrspülmaschine (1) nach Anspruch 1, bei der die mindestens zwei Ventilatoren (14, 14', 14") im Luftstrom nebeneinander angeordnet sind.

4. Geschirrspülmaschine (1) nach Anspruch 3, bei der den mindestens zwei Ventilatoren (14, 14', 14") jeweils eigene Luftauslässe (12, 12') des Luftkanals (10) zugeordnet sind.

5. Geschirrspülmaschine (1) nach Anspruch 4, bei der mindestens einer der Luftauslässe (12, 12') zu einer Außenseite des Spülraums (2) führt.

6. Geschirrspülmaschine (1) nach einem der Ansprüche 3 bis 5, bei der mindestens ein Absperrorgan im Luftkanal (10) angeordnet ist, um einen Luftstrom durch zumindest einen der Ventilatoren (14, 14', 14") zu unterbinden.

7. Geschirrspülmaschine (1) nach Anspruch 6, bei der das Absperrorgan eine Klappe (15) oder ein Schieber ist.

8. Geschirrspülmaschine (1) nach einem der Ansprüche 3 bis 7, bei der eine Querschnittsfläche des Luftkanals (10) zumindest abschnittsweise rechteckig oder L-förmig ist.

9. Geschirrspülmaschine (1) nach einem der Ansprüche 1 bis 8, bei der die Ventilatoren (14, 14', 14") in Luftströmungsrichtung vor und/oder hinter dem Wärmetauscher (13) angeordnet sind.

10. Geschirrspülmaschine (1) nach einem der Ansprüche 1 bis 9, bei der im Luftkanal (10) mindestens ein Temperatursensor (16, 17) und/oder mindestens ein Drucksensor (18, 19) angeordnet ist.

11. Geschirrspülmaschine (1) nach Anspruch 10, aufweisend eine Steuereinrichtung zum Ein- bzw. Ausschalten von zumindest einem der Ventilatoren (14, 14', 14") und/oder zum Variieren der Drehzahl von zumindest einem der Ventilatoren (14, 14', 14") abhängig von mindestens einem Messwert des Temperatursensors (16, 17) und/oder Drucksensors (18, 19).

12. Geschirrspülmaschine (1) nach einem der Ansprüche 10 bis 11, bei der mindestens zwei Drucksensoren (18, 19) zur Messung von zwei Drücken (p1, p2) vorgesehen sind, von denen zumindest einer im Luftkanal (10) angeordnet ist.

13. Geschirrspülmaschine (1) nach einem der Ansprüche 10 bis 12, bei der ein Drucksensor (18) vor und ein Drucksensor (19) in Luftstromrichtung hinter dem Wärmetauscher (13) positioniert ist.

14. Geschirrspülmaschine (1) nach einem der Ansprüche 10 bis 13, bei der ein Drucksensor (18) vor und ein Drucksensor (19) in Luftstromrichtung hinter einem im Luftkanal (10) angeordneten Luftfilter (20) positioniert ist.

15. Geschirrspülmaschine (1) nach einem der Ansprüche 10 bis 14, bei der ein Temperatursensor (16) im Luftkanal (10) in Luftströmungsrichtung vor dem Wärmetauscher (13) und/oder ein Temperatursensor (16, 17) in Luftströmungsrichtung hinter dem Wärmetauscher (13) angeordnet ist.
